# EUROPÄISCHE PATENTANMELDUNG

(11) **EP 1 008 328 A2**
(43) Veröffentlichungstag der Anmeldung: **14.06.2000**
(21) Anmeldenummer: 99124059.9
(22) Anmeldetag: 10.12.1999
(51) Int. Cl.: A61C 5/12

(54) **Interdentalwerkzeug**

(30) Priorität: 10.12.1998 DE 29822072 U
(71) Anmelder: Ringer, Felix, Dr., 85567 Grafing (DE)
(72) Erfinder: Ringer, Felix, Dr., 85567 Grafing (DE)
(74) Vertreter: HOFFMANN - EITLE

(57) **Zusammenfassung**

Um ein Werkzeug für die Herstellung von mehrflächigen plastischen Zahnfüllungen, die Abdichtung von Zahnkavitäten zum Zahnfleisch und einwandfreien Wiederherstellen von Kontaktpunken zum Nachbarzahn des behandelten Zahns bereitzustellen, was kostengünstig in der Herstellung und einfacher zu verwenden ist, wird ein Interdentalwerkzeug (10) mit einem Keilschaft (14) zum Einführen in einen Zahnzwischenraum und einem zumindest bereichsweise flexiblen Band (22) bereitgestellt, das sich flächig über im wesentlichen den gesamten Zahnzwischenraum erstreckt; das Band (22) und der Keilschaft (14) sind miteinander verbunden.

## Beschreibung

### TECHNISCHES GEBIET

Die vorliegende Erfindung betrifft ein neuartiges Werkzeug, mit dem mehrflächige plastische zahnfüllungen herstellbar, zahnkavitäten zum Zahnfleisch abdichtbar und Kontaktpunkte zum Nachbarzahn des behandelten Zahns einwandfrei wiederherstellbar sind.

### STAND DER TECHNIK

Für die Herstellung mehrflächiger plastischer Zahnfüllungen ist die Verwendung von Matrizenbändern bekannt. Diese werden in Form von Metall- oder Kunststoffstreifen um die Zähne gelegt, um als Formgebungshilfen die Wiederherstellung verlorengegangener Zahnflächen zu ermöglichen.

Bei der Anfertigung von Zahnfüllungen kann es vorkommen, daß Füllungsmaterial überpreßt wird und über die Zähne hinausragende Überschüsse bildet. Nach Fertigstellen der Füllungen sind solche Überschüsse approximal, also zwischen den Zähnen, nur sehr schwierig zu entfernen und können zu Zahnfleischentzündungen mit nachfolgendem Abbau von Anteilen des Zahnhalteapparats führen.

Um ein Überpressen von Füllungsmaterial zu vermeiden, ist es erforderlich, die Kavitäten zum Zahnfleich hin abzudichten.

Diese Abdichtung der Zahnkavität zum Zahnfleisch ist vor allem im Zahnzwischenraum problematisch, ebenso wie die Schaffung eines optimalen Kontaktpunkts zum Nachbarzahn.

Die einwandfreie Wiederherstellung des Kontaktpunktes zum Nachbarzahn verhindert Zahnwanderungen und Einbeißen von Speiseresten in den Zahnzwischenräumen, was andernfalls zu Schädigungen des Zahnhalteapparates führen kann. Bei Schneidezähnen werden auch Ästhetik und Lautbildung hierdurch beeinflußt.

Zum Abdichten der Zahnkavität sowie zur Wiederherstellung des Kontaktpunkts zum Nachbarzahn werden bislang sogenannte Interdentalkeile verwendet. Solche Keile haben eine geometrische Form, die ein leichtes Einführen in den Zahnzwischenraum ermöglicht. Sie können einen dreieckigen Querschnitt mit geraden oder konkaven Seitenflächen aufweisen. Solche Keile sind beispielsweise aus den Gebrauchsmustern DE 89 12 620 U1 und DE 92 17 796 U1 bekannt.

Wird ein solcher Keil im rechten Winkel zur Zahnachse derart in einen Zahnzwischenraum eingeführt, daß eine Fläche des Keils auf dem Zahnfleisch aufliegt, kann hiermit ein gesondert eingeführtes Matrizenband an den zu füllenden Zahn gepreßt und die Kavität zum Zahnfleisch hin abgedichtet werden. Zugleich werden die Zähne etwas auseinander gedrückt, so daß sich nach Legen der Füllung und Entfernen des Keils die Zähne wieder zurückstehen und ein einwandfreier Kontaktpunkt ermöglicht wird. Gesondert einzuführende Matrizenbänder sind z.B. aus dem Gebrauchsmuster DE 90 17 522 U1 bekannt.

Im Falle von Kunststoffüllungen ist es ebenfalls bekannt, Keile aus transparentem Kunststoff zu verwenden, damit das Licht von Polymerisationslampen direkt auf die Kavitätenstufe im Zahnzwischenraum geleitet wird. Größere Probleme treten im Stand der Technik bei der Wiederherstellung von Approximalkontakten bei an zwei Nachbarzähnen angrenzenden Defekten auf. Hierbei muß entweder erst eine Kavität vollständig versorgt werden, um dann Matrizenband und Keil zu entfernen an dem zweiten Zahn neu zu positionieren. Dies ist mit erheblichem zeitlichen Aufwand verbunden. Eine andere Möglichkeit besteht darin, zwei Matrizenbänder zu benutzen, die durch den dazwischen geschobenen Keil an jeweils einen Zahn gepreßt werden. Dies ermöglicht zwar das gleichzeitige Füllen beider Kavitäten, erschwert jedoch die Gestaltung des Approximalkontakts, da die Dicke von nunmehr zwei Matrizenbändern durch verstärktes Auseinanderpressen der Zähne mit einem Keil ausgeglichen werden muß. Auch ist es häufig sehr schwierig, auf diese Weise die Symmetrie der Form von Schneidezähnen zu erhalten.

### DARSTELLUNG DER ERFINDUNG

Der vorliegenden Erfindung liegt das technische Problem zugrunde, ein Werkzeug für die Herstellung von mehrflächigen plastischen Zahnfüllungen, die Abdichtung von zahnkavitäten zum Zahnfleisch und einwandfreien Wiederherstellen von Kontaktpunken zum Nachbarzahn des behandelten Zahns bereitzustellen, was kostengünstig in der Herstellung und einfacher zu verwenden ist.

Gelöst wird diese Aufgabe durch einen Interdentalkeil nach Anspruch 1. Vorteilhafte Weiterbildungen der Erfindung sind in den Unteransprüchen angegeben.

Entsprechend weist das erfindungsgemäße Interdentalwerkzeug einen Keilschaft zum Einführen in einen Zahnzwischenraum auf. Durch das Vorsehen eines Keilschafts, der im allgemeinen einen spitzeren Endbereich aufweist, läßt sich aufgrund der Keilform durch Manipulation der Einführtiefe des eingeführten Keils die Lage benachbarter Zähne zueinander verändern. Hierdurch kann die Dicke von in Zahnzwischenräume eingeführten Gegenständen kompensiert werden, wodurch der sich nach der Behandlung gewünschte Kontakt benachbarter Zähne erzeugbar ist. Vorteilhafterweise umfaßt das erfindungsgemäße Interdentalwerkzeug ebenfalls ein Band, das sich flächig über im wesentlichen den gesamten zahnzwischenraum erstreckt. Hierdurch ist einerseits gewährleistet, daß die Approximalfläche abgedeckt ist, so daß vorteilhafterweise eine Abdichtung der Kavitäten zum Zahnfleisch des Zwischenraums erfolgt. Andererseits ist gewährleistet, daß das Band nicht die gesamte Außenkontur des Zahnes im Sinne einer Verschalung umgibt, so daß die Bewegungsfreiheit des behandelten Zahns und somit der verfügbare Zwischenraum im Approximalbereich vergrößert wird. Die Erfindung sieht zudem vor, daß das Band und der Keilschaft miteinander verbunden sind. Durch die Verbindung wird eine zuverlässige Abdichtung beider Kavitäten bei gleichzeitigem Auseinanderpressen der zu füllenden Zähne bewirkt. Zusätzlich erzielt die erfindungsgemäße Merkmalskombination eine Formgebungshilfe beim Wiederaufbau der Approximalflächen der geschädigten Zähne. Hiermit ist insbesondere das gleichzeitige Legen zweier benachbarter Kunststoffüllungen erleichtert. Da die hierfür notwendige Verkeilung, das Anätzen der Zähne, Auftragen, Einwirkzeit und Aushärten des Haftvermittlers bzw. der Füllung nur einmal anfallen, ergibt sich durch die Erfindung eine erhebliche Zeitersparnis gegenüber getrennten Füllungsvorgängen.

Um die Fertigung des erfindungsgemäßen Interdentalwerkzeugs zu vereinfachen, ist vorgesehen, daß das Band und der Keilschaft einstückig miteinander verbunden sind. Dies kann besonders einfach dann verwirklicht werden, wenn das Interdentalwerkzeug einstückig aus Kunststoff und durch ein formgebendes Verfahren hergestellt ist. Diese Weiterbildungen der Erfindung entwickeln insbesondere dann zusätzliche Vorteile, wenn herkömmliche Keilschäfte in Formen hergestellt werden, bei denen die Teilungsebene oder dergleichen der Form genutzt wird, um das erfindungsgemäße Band auszubilden. Folglich können konventionelle Fertigungsverfahren für Keilschäfte verwendet werden, um das erfindungsgemäße neuartige Interdentalwerkzeug zu produzieren.

Eine besonders günstige und bevorzugte geometrische Form ergibt sich für das erfindungsgemäße Interdentalwerkzeug dann, wenn der Keilschaft sich an einer gemeinsamen Kante schneidende, zueinander konkave Flächen aufweist. Durch diese geometrische Form wird ein einfaches Einführen des Keilschafts in den Zahnzwischenraum sowie ein besonders gutes Anpassen des Keilschafts an die Zahnhälse verwirklicht.

Das Einführen des Interdentalwerkzeugs wird dann besonders vereinfacht, wenn die gemeinsame Kante des Keilschafts sowie eine zur Spitze des Keilschafts verlaufende Seite des Bands in der Längsrichtung des Keilschafts konkav ausgebildet sind.

Eine Weiterbildung der Erfindung sieht vor, daß das Interdentalwerkzeug zusätzlich ein Ansatzstück aufweist, das bevorzugt quaderförmig ist. Ein derartiges Ansatzstück vereinfacht die Handhabung des Interdentalwerkzeugs.

Falls Kunststoffüllungen verwendet werden, kann gemäß der Erfindung vorteilhafterweise ein Interdentalwerkzeug aus zumindest bereichsweise transparentem Kunststoff verwendet werden, um das Licht von Polymerisationslampen unmittelbar auf die Kavitätenstufe im Zahnzwischenraum zu leiten, was die Kunststoffüllungen aushärten läßt.

### KURZE BESCHREIBUNG DER ZEICHNUNGEN

Im folgenden wird zur weiteren Erläuterung und zum besseren Verständnis der Erfindung unter Bezugnahme auf die beigefügten Zeichnungen ein Ausführungsbeipiel näher beschrieben und ausgeführt. Es zeigt:
- Fig. 1: eine Seitenansicht eines Ausführungsbeispiels des erfindungsgemäßen Interdentalwerkzeugs;
- Fig. 2: eine der Fig. 1 entsprechende Vorderansicht;
- Fig. 3: eine perspektivische Ansicht entsprechend den Figuren 1 und 2;
- Fig. 4: ein erstes Anwendungsbeispiel des erfindungsgemäßen Interdentalwerkzeugs, eingesteckt zwischen zwei Schneidezähnen und in der Vorderansicht;
- Fig. 5: eine der Fig. 4 entsprechende Draufsicht;
- Fig. 6: ein zweites Anwendungsbeispiel des erfindungsgemäßen Interdentalwerkzeugs, eingesteckt zwischen zwei Seitenzähnen und in der Vorderansicht und
- Fig. 7: eine der Fig. 6 entsprechende Draufsicht.

### AUSFÜHRLICHE BESCHREIBUNG EINES AUSFÜHRUNGSBEISPIELS

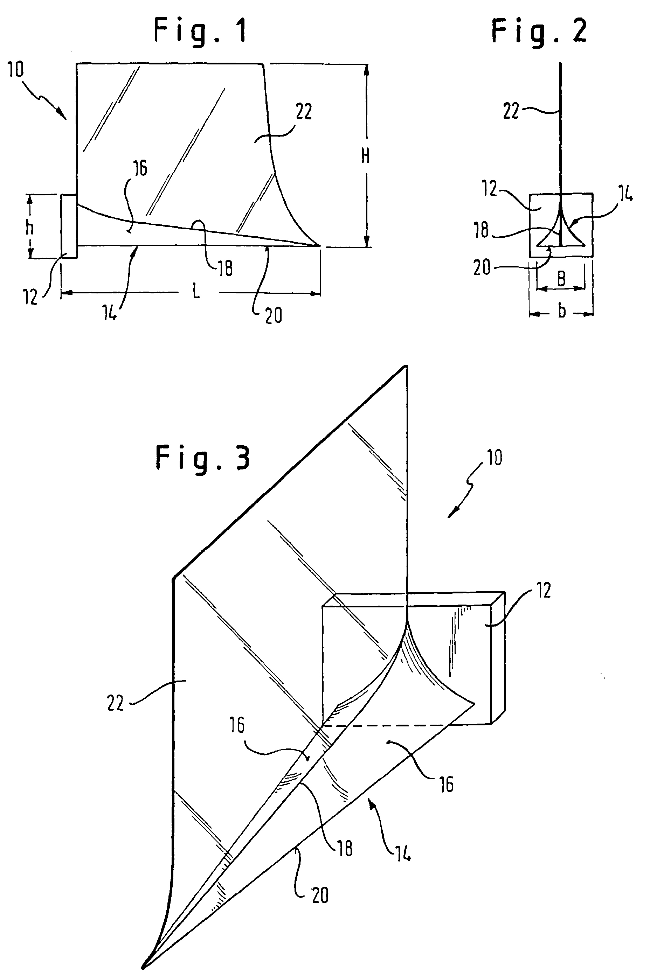

Zunächst unter Bezugnahme auf die Fig. 1 ist ein Matrizenkeil allgemein mit 10 bezeichnet. In seiner Grundform besteht der Matrizenkeil 10 aus einem quaderförmigen Ansatzstück 12 und einem daran anschließenden Keilschaft 14 mit im wesentlichen dreieckigen Querschnitt. Der Keilschaft 14 weist konkave Seitenflächen 16 auf. An der gemeinsamen Kante 18 der konkaven Flächen ist im Ausführungsbeispiel einstückig das Matrizenband 22 befestigt, das sich in der Form einer dünnen Kunststoffolie über im wesentlichen die gesamte Länge des Schaftes erstreckt. Die Unterseite 20 des Keilschafts 14 ist im Ausführungsbeispiel flach ausgebildet, was aus der Fig. 2 besser hervorgeht.

Aus den Fig. 1 und 2 gehen die für eine vielseitige Verwendung des Interdentalwerkzeugs sowohl im Schneidezahnals auch im Seitenzahnbereich besonders günstigen und bevorzugten Abmessungen wie folgt hervor. Die Gesamtlänge des Werkzeugs L beträgt ungefähr 20 mm, die nutzbare Werkzeughöhe H, d.h. die Höhe von der Unterseite 20 des Keilschafts 14 bis zum oberen Rand des Matrizenbands 22, beträgt ungefähr 15 mm. Die Höhe h des quaderförmigen Ansatzstücks 12 beträgt ungefähr 5 mm. Die Breite b dieses Ansatzstücks beträgt ebenfalls 5 mm, wohingegen die Breite B des Keilschafts 14 an seinem Übergang zum quaderförmigen Ansatzstück 12 4 mm beträgt.

Nunmehr unter Bezugnahme auf die Fig. 3 sind zwei der Schaftseitenflächen 16 konkav ausgeformt, um eine bessere Adaption an die Zahnflächen zu erreichen. Die gemeinsame Kante 18, d.h. der Übergang zwischen Keilschaft 14 und Matrizenband 22 ist in Längsrichtung des Keilschafts 14 konkav ausgebildet. Diese konkave Ausgestaltung der Schaftseitenflächen 16 und der gemeinsamen Kante 18 ermöglicht nicht nur eine bessere Adaption an die Zahnflächen, sondern erleichtert auch das Einführen des Werkzeugs in Zahnzwischenräume.

Der Matrizenkeil 10 besteht aus transparentem Kunststoff, so daß er für die mittels Licht aushärtenden Füllungen oder dergleichen als Lichtleiter dienen kann. Die Abmessungen und die Härte des Matrizenkeils 10 lassen sich variieren, um verschieden dimensionierten und geformten Zähnen und Approximalräumen gerecht zu werden. Die Herstellung des neuartigen Matrizenkeils 10 kann durch geeignete Formgebung von Kunststoffen erfolgen. Obwohl dies z.Zt. nicht der bevorzugten Ausführungsform entspricht, ist es ebenfalls denkbar, den Keilschaft 14 in Holz auszubilden, wobei die gemeinsame Kante 18 eine Nut mit Hinterschneidungen aufweist. In dieser Nut mit Hinterschneidungen läßt sich dann als Matrizenband 22 ein Metallstreifen einführen. Zusätzlich müßte bei dieser alternativen Ausführungsform gewährleistet sein, daß das Matrizenband 22 gegen axiales Herausziehen arretierbar ist.

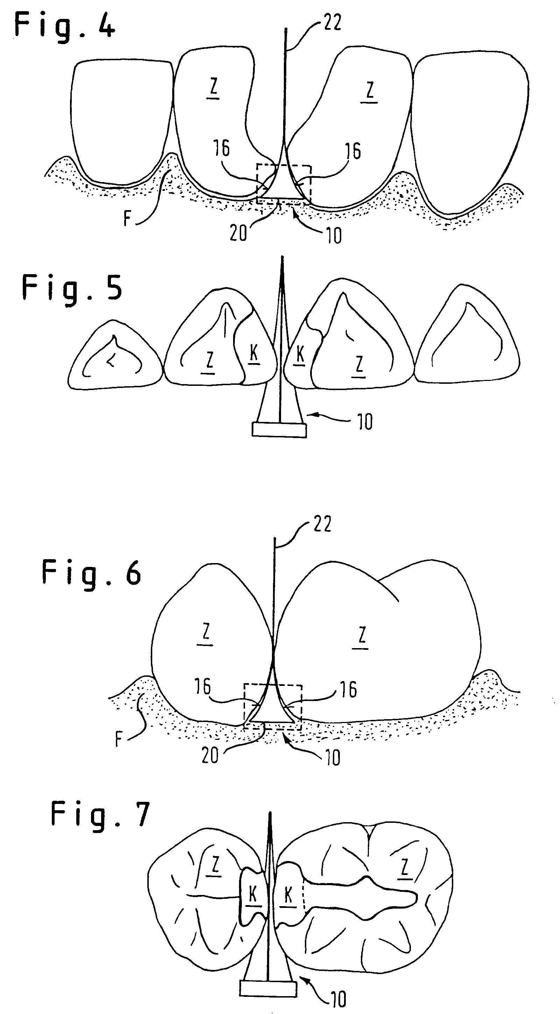

Unter Bezugnahme auf die Figuren 4 bis 7 werden im folgenden Anwendungsbeispiele der Erfindung erläutert. Falls Zähne Z aneinander angrenzende Kavitäten K aufweisen, werden die Kavitäten nach üblichen Verfahren vorbereitet. Nach dem Präparieren der Kavitäten K und einem evtl. Anbringen von einem Spanngummi wird der Matrizenkeil 10 einfach unterhalb der Präparationsgrenzen in den Approximalraum geschoben und durch Drücken auf das Ansatzstück 12 in seine endgültige Position gebracht (Fig. 5 für den Schneidezahnbereich, Fig. 7 für den Seitenzahnbereich).

Die Unterseite 20 des Keilschafts 14 ruht dabei auf dem Zahnfleisch F, und die konkaven Seitenflächen 16 liegen an den Zahnhälsen an, wodurch über eine geringfügige Rotation um die Längsachse des Keilschafts 14 Form und Breite der Füllungen ästhetischen Erfordernissen angepaßt werden können. Der durch eine derartige Rotation und eine Variation der Einführtiefe ausgeübte Druck bestimmt die Klemmwirkung des Matrizenkeils im Approximalraum und die Stärke des späteren Kontaktpunkts.

Im eingeführten Zustand steht das Matrizenband 22 im wesentlichen senkrecht zur Unterseite 20 von dem Keilschaft 14 so weit nach oben vor, daß sie gerade oberhalb der Zähne endet. Somit ist eine zuverlässige Abdichtung der Kavität zum Zahnfleisch und zum Nachbarzahn gewährleistet, und es ist zugleich sichergestellt, daß der Zugang zur zu behandelnden Stelle nicht erschwert wird.

Nachfolgend lassen sich idealerweise Kavitäten auch benachbarter Zähne füllen. Nach dem Aushärten der Füllungen wird der Matrizenkeil 10 durch Zug am Ansatzstück 10 entfernt und die Füllungsoberflächen können ausgearbeitet und poliert werden.

Die in der vorliegenden Beschreibung verwendeten Angaben zur Abmessung geben die derzeit bevorzugte Ausführungsform wieder. Es ist Fachleuten ersichtlich, daß diese Abmessungen dem jeweiligen Anwendungsfall entsprechend abgewandelt werden können. Angaben wie 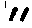 oben" und 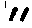 unten" dienen lediglich zur Bezeichnung relativer Lagen.

## Patentansprüche

1. Interdentalwerkzeug (10), mit
- einem Keilschaft (14) zum Einführen in einen Zahnzwischenraum und
- einem zumindest bereichsweise flexiblen Band (22), das sich flächig über im wesentlichen den gesamten Zahnzwischenraum erstreckt;
- das Band (22) und der Keilschaft (14) sind miteinander verbunden.

2. Interdentalwerkzeug nach Anspruch 1, dadurch gekennzeichnet, daß das Band (22) und der Keilschaft (14) einstückig miteinander verbunden sind.

3. Interdentalwerkzeug nach Anspruch 1 oder 2, dadurch gekennzeichnet, daß der Keilschaft (14) sich an einer gemeinsamen Kante (18) schneidende, zueinander konkave Flächen (16) aufweist.

4. Interdentalwerkzeug nach Anspruch 3, dadurch gekennzeichnet, daß die gemeinsame Kante (18) in einer Längsrichtung des Keilschafts (14) konkav ist.

5. Interdentalwerkzeug nach mindestens einem der vorhergehenden Ansprüche, dadurch gekennzeichnet, daß es zusätlich ein Ansatzstück (12) aufweist.

6. Interdentalwerkzeug nach Anspruch 5, dadurch gekennzeichnet, daß das Ansatzstück (12) quaderförmig ist.

7. Interdentalwerkzeug nach Anspruch 5 oder 6, dadurch gekennzeichnet, daß das Ansatzstück (12) an einem Endbereich des Keilschafts (14) angebracht ist, der seiner Spitze gegenüberliegt.

8. Interdentalwerkzeug nach mindestens einem der vorhergehenden Ansprüche, dadurch gekennzeichnet, daß es einstückig aus Kunststoff und durch ein formgebendes Verfahren hergestellt ist.

9. Interdentalwerkzeug nach mindestens einem der vorhergehenden Ansprüche, bestehend aus einem zumindest bereichsweise transparenten Kunststoffwerkstoff.

10. Interdentalwerkzeug nach mindestens einem der vorhergehenden Ansprüche, dadurch gekennzeichnet, daß das Band (22) im wesentlichen rechteckförmig ist.

11. Interdentalwerkzeug nach Anspruch 10, dadurch gekennzeichnet, daß eine zur Spitze des Keilschafts (14) verlaufende Seite des Bands in der Längsrichtung des Keilschafts konkav ausgebildet ist.
